Europäisches Patentamt

European Patent Office

Office européen des brevets

(11) Veröffentlichungsnummer: **0 321 439**
**A2**

(12) **EUROPÄISCHE PATENTANMELDUNG**

(21) Anmeldenummer: **88890301.0**

(22) Anmeldetag: **01.12.88**

(51) Int. Cl.⁴: **G 01 D 5/245**

(30) Priorität: **18.12.87 AT 3345/87**

(43) Veröffentlichungstag der Anmeldung:
**21.06.89 Patentblatt 89/25**

(84) Benannte Vertragsstaaten:
**BE CH DE FR GB IT LI LU NL SE**

(71) Anmelder: **RSF-Elektronik Gesellschaft m.b.H.**
**A-5121 Tarsdorf 93 (AT)**

(72) Erfinder: **Rieder, Heinz**
**St.Pantaleon (AT)**

**Schwaiger, Max**
**Ostermiething (AT)**

(74) Vertreter: **Hübscher, Heiner, Dipl.-Ing. et al**
**Spittelwiese 7**
**A-4020 Linz (AT)**

(54) **Inkrementales Messsystem.**

(57) Ein inkrementales Meßsystem, insbesondere ein Längenmeßsystem besitzt einen Maßstab (1), auf dem eine die
Maßstabverkörperung darstellende Meßteilung (2) vorgesehen
ist, eine Abtasteinheit (10) mit Abtastelementen (11, 12) zur
Erzeugung von Meßsignalen aus der Abtastung der Meßteilung
und eine Auswertungseinheit zur Erzeugung von digitalen
Zählsignalen aus den Meßsignalen. Parallel zur Meßteilung ist
eine Referenzspur (13) angebracht, der eine Auswertungsschaltung zur Bestimmung von Bezugspunkten zugeordnet ist.
Diese Referenzspur besteht aus einem elektrischen Widerstandskörper (13, 15), an dem wenigstens ein mit der
Abtasteinheit (10) verstellbarer Abtastkontakt (14, 16) anliegt
und der in der Auswertungsschaltung mit dem Abtastkontakt in
einer Widerstands-Meßschaltung liegt, so daß ein Bezugspunkt
durch den elektrischen Widerstand zwischen einem Ende des
Widerstandskörpers (13) und dem Abtastkontakt (14, 16) bzw.
das Teilungsverhältnis des Widerstandskörpers (13, 15)durch
den bzw. die Abtastkontakte (14, 16) definierbar ist. Es kann
auch eine zweite Referenzspur mit Referenzmarmarken (17,
17a, 17b) vorgesehen werden, wobei die Widerstandsmeßschaltung eine Auswahleinrichtung für die Referenzmarken
steuert.

**FIG.1**

EP 0 321 439 A2

## Beschreibung

## Inkrementales Meßsystem

Die Erfindung betrifft ein inkrementales Meßsystem, insbesondere ein Längenmeßsystem, mit einem Maßstab, auf dem eine die Maßstabverkörperung darstellende Meßteilung vorgesehen ist, einer Abtasteinheit mit Abtastelementen zur Erzeugung von Meßsignalen aus der Abtastung der Meßteilung und einer Auswertungseinheit zur Erzeugung von digitalen Zählsignalen aus diesen Meßsignalen, wobei eine zur Meßteilung parallele, abtastbare Referenzspur mit zugeordneter Auswertungsschaltung zur Bestimmung von Bezugspunkten vorgesehen ist.

Bei solchen Meßsystemen, wie sie unter anderem aus der EP-A2-0 239 768 bekannt sind, ist die Maßstabverkörperung über die Abtasteinheit vorzugsweise berührungslos nach optoelektronischen Abtastprinzipien abtastbar. Es sind auch Meßsysteme mit induktiv, magnetisch oder kapazitiv abtastbaren Maßstabverkörperungen bekannt, wobei bei der Abtastung der Maßstabverkörperung jeweils in ihrer Grundform sinusförmige Analogsignale als Meßsignale erhalten werden, bei denen ein vollständiger Signalzug einem vollständigen Maßstabinkrement zugeordnet ist, welches bei optoelektronischer Abtastung aus je einem Hell- und einem Dunkelfeld der Maßstabteilung bestehen kann. Bei der Abtastung werden bisher meist wenigstens zwei, beispielsweise um 90° phasenverschobene Meßsignale erzeugt. Abhängig von der Verstellrichtung der Abtasteinheit eilt das eine oder andere Signal vor und die Verstellrichtung wird über einen Richtungsdiskriminator aus diesen Signalen festgestellt. Ferner werden die analogen Meßsignale in der Abtasteinheit zu digitalen Zählsignalen verarbeitet. Dabei ist eine elektronische oder rechnerische Unterteilung des Maßstabes möglich, wofür meist ein Mikrocomputer eingesetzt wird. Die digitalen Zählsignale können auch als Steuersignale für eine Maschine bzw. zur Darstellung des Meßergebnisses auf einer Anzeigeeinheit verwendet werden. Zur Herstellung einer eindeutigen Beziehung zwischen den Zählsignalen und der jeweils abgetasteten Maßstabstelle ist es notwendig, die Zähleinrichtung an vorgegebenen oder vorwählbaren Maßstabstellen auf bestimmte Werte, beispielsweise Null, zu setzen. Dafür werden aus der Referenzspur erhaltene Signale verwendet. Bisher sind in der Referenzspur eine oder mehrere Referenzmarken vorgesehen, die von eigenen Abtasteinheiten nach den gleichen Abtastprinzipien wie die Meßteilung über ihre Abtasteinheit abgetastet werden, wobei bei der Ausrichtung des zugeordneten Abtastelementes auf eine Referenzmarke über die Auswertungsschaltung ein Steuersignal erzeugt wird, das die Zähl- oder Anzeigeeinheit beeinflußt, beispielsweise einen Zähler oder eine Zähleinrichtung auf Null oder einen bestimmten Wert setzt. Dieser "bestimmte" Wert gibt zugleich die Lage eines gewählten Nullpunktes der Anzeige zur jeweiligen Referenzmarke an. Wenn mehrere feste Bezugspunkte gewählt werden sollen und zum Wiederfinden dieser Bezugspunkte nach einem Betriebsausfall, nach Arbeitsunterbrechungen usw. vermieden werden soll, daß eine einzige Referenzmarke neuerlich angefahren werden muß, kann man auch mehrere Referenzmarken vorsehen und diese Referenzmarken durch zusätzliche Einrichtungen bzw. durch zusätzliche Kennzeichnungsmerkmale definieren, so daß beim Überfahren von der Abtasteinheit festgestellt werden kann, welche Referenzmarke angefahren wurde und man die Steuerung bzw. Umrechnung oder Einstellung auf diese Referenzmarke beziehen kann. Bisher werden entweder komplizierte Steuer- und Schaltsysteme zur Unterscheidung der ausgewählten von den nicht ausgewählten Referenzmarken erforderlich oder es wird notwendig, nicht ausgewählte Referenzmarken abzudecken oder sogar zu entfernen. An Auswahlsystemen sind mechanische Ein-Ausschalschalter zur Aktivierung der Auswertungsschaltung nur an vorgewählten Referenzmarken und nach der DE-B 25 40 412 an vorwählbaren Maßstabstellen anbringbare Magnete zur Betätigung von als Reed-Relais ausgebildeten Auswahlschaltern bekannt. Es ist auch bekannt, die Referenzmarken in mehreren Referenzspuren vorzusehen, jeder Spur eine Abtasteinheit zuzuordnen und eine Referenzmarke durch Auswahl der Abtasteinheit der zugeordneten Spur für die Abgabe von Referenzsignalen zu wählen. Hier erfordert die Änderung der Auswahl bestimmter Referenzmarken und auch die Einstellung einen beträchtlichen nur vom Fachmann durchführbaren Arbeits- und Zeitaufwand. Löschbare Referenzmarken können mit kleinen Abständen voneinander in einer oder zwei Spuren angebracht werden, wobei alle nicht benötigten Referenzmarken mechanisch entfernt oder überklebt werden müssen. Auch dies hat Nachteile. Nach der EP-A2-0 239 768 wird deshalb vorgesehen, die einer ausgewählten Referenzmarke in gleicher Teilung benachbarten Referenzmarken zu entfernen und in der Auswertungsschaltung Erkennungseinrichtungen vorzusehen, die eine Referenzmarke nach der Anfahrrichtung und dem festgestellten Fehlen einer benachbarten Referenzmarke auswählen. Auch diese Schaltungen sind aufwendig, wobei gelöschte, also mechanisch entfernte Referenzmarken nicht neuerlich aktiviert werden können. Es läßt sich ingesamt nur eine geringe Anzahl von Festpunkten bleibend festlegen und eine spätere Änderung in der Auswahl ist jeweils nur mit großem Aufwand oder überhaupt nicht möglich.

Aus der DE-A1-27 10 581 ist es bekannt, zur relativ groben Bestimmung der Lage gegeneinander verstellbarer Teile, etwa zur Rückführung des Stellweges von Stellmotoren Potentiometerschaltungen zu verwenden, wobei der Schleifer des Potentiometers der Stellbewegung des Stellmotores oder Stellgliedes folgt. Dabei sind auch schon Schaltungen mit mehreren Abgriffen zur Eliminierung von Änderungen im Übergangswiderstand zwischen Schleifer und Potentiometer bekannt.

Aufgabe der Erfindung ist die Schaffung eines Meßsystems der eingangs genannten Art, bei dem mit schaltungstechnisch geringem Aufwand und dabei hoher Sicherheit ein oder mehrere Bezugspunkte bestimmt, im Bedarfsfall gewählt werden können und bei denen im Bedarfsfall auch die Bestimmung der Verstellrichtung bzw. die Auswahl von Bezugspunkten nach Referenzmarken vereinfacht werden kann.

Die gestellte Aufgabe wird dadurch gelöst, daß die Referenzspur aus einem elektrischen Widerstandskörper besteht, an dem wenigstens ein mit der Abtasteinheit verstellbarer Abtastkontakt anliegt und der in der Auswertungsschaltung mit dem Abtastkontakt in einer Widerstands-Meßschaltung liegt, so daß ein Bezugspunkt durch den elektrischen Widerstand zwischen einem Ende des Widerstandskörpers und dem Abtastkontakt bzw. das Teilungsverhältnis des Widerstandskörpers durch den bzw. die Abtastkontakte definierbar ist.

Erfindungsgemäß wird parallel zum inkrementalen Meßsystem ein aus dem Widerstandskörper und der Abtasteinheit gebildetes absolutes Meßsystem angebracht, bei dem jeder Punkt durch bestimmte Widerstandswerte definierbar ist, wobei durch geeignete Schaltungen und im Bedarfsfall durch Abtastung mit wenigstens zwei gegebenenfalls in Längsrichtung des Maßstabkörpers versetzten Abtastkontakten Änderungen des Übergangswiderstandes zwischen Widerstandskörper und Abtastkontakt für die Messung eliminiert werden können. Es wird dadurch möglich, wenigstens einen, in der Praxis aber eine beliebige Anzahl von Bezugspunkten zu definieren.

Für viele Anwendungsfälle reicht die Bestimmung von Bezugspunkten durch den Widerstandswert allein aus. Für hochgenaue Messungen ist das absolute Meßsystem als Auswahleinrichtung für Referenzmarken heranziehbar. Bei dieser Ausführung sind dann in einer weiteren Referenzspur mehrere je einem festen Bezugspunkt zugeordnete Referenzmarken und in der Abtasteinheit zugeordnete Abtastelemente vorgesehen, wobei die Auswertungsschaltung eine von der Widerstandsmeßschaltung gesteuerte Auswahleinrichtung enthält, die ein bei der Ab tastung einer Referenzmarke erzeugtes Referenzsignal nur bei einem gleichzeitig erfaßten, vorgebbaren Widerstandswert der Auswertung zuführt. Durch Änderung der Vorgabewerte für den Widerstand können beliebige Referenzmarken ausgewählt werden, wobei auch Änderungen dieser Auswahl nachträglich ohne Eingriff in das Meßsystem bzw. den Maßstab möglich werden.

Der Widerstandskörper kann nach einer möglichen Ausführung am Maßstabkörper parallel zur Meßteilung angebracht sein, wobei es möglich ist, diesen Widerstandskörper durch Aufdampfen oder bei Verwendung einer aus elektrisch leitendem Material gebildeten Meßteilung, die etwa auf photographischchemischem Wege aus einer am Glasmaßstabkörper niedergeschlagenen Metall- oder Metalloxidschicht hergestellt wird, direkt aus dem Material der Meßteilung zu bilden, wobei man parallel zur Meßteilung im einfachsten Fall einen linienförmigen Widerstandskörper stehen läßt.

Nach einer anderen Variante kann der Widerstandskörper auch an einem Maßstabträger, insbesondere an einem rohrförmigen Schutzgehäuse für Maßstab und Abtasteinheit isoliert angebracht werden.

Die Auswertungsschaltung kann Speicher oder Stellglieder zur Vorgabe von einzelnen Bezugspunkten zugeordneten Widerstandswerten und eine Vergleicherschaltung aufweisen, die bei Übereinstimmung des bei der Abtastung momentan erfaßten W1derstandswertes mit dem Vorgabewert ein Referenzsignal erzeugt bzw. der Auswertung zuführt. Für die Bestimmung nur eines Referenzpunktes bzw. des Bereiches des Widerstandswertes, in dem eine Referenzmarke ausgewertet werden soll, genügt eine einfache Brückenschaltung. Die Änderung des Widerstandes bzw. des Widerstandsverhältnisses gibt aber auch die Verstellrichtung an, so daß im Bedarfsfall bei dauernder Abtastung des Widerstandskörpers die Verstellrichtung der Abtasteinheit gegenüber dem Maßstab aus dieser Widerstandsänderung bestimmt und daraus entsprechende Steuersignale für die Zähleinrichtung erzeugt werden können. Durch Speicherung verschiedener Widerstandswerte können mehrere Bezugspunkte festgelegt werden, wobei es auch möglich ist, die Widerstandswerte für momentan beliebig ausgewählte Bezugspunkte zu speichern. Der Speicherbefehl kann dabei auch über die Auswertungseinheit der digitalen Zählsignale etwa beim Erreichen eines vorgewählten Zählerstandes gegeben werden. Da auf bestimmte Widerstandswerte bzw. Widerstandsverhältnisse abgeglichen und eingestellt wird, ist es nicht notwendig, Widerstandskörper zu verwenden, die pro Längeneinheit konstant bleibende Widerstandswerte aufweisen. Schließlich kann man die erhaltenen bzw. abgegriffenen Widerstandswerte auch zur Bestimmung von Korrekturpunkten heranziehen, bei deren Überfahren Teilungsfehler usw. des Hauptmaßstabes durch Korrektursignale ausgeglichen werden.

In der Zeichnung ist der Erfindungsgegenstand beispielsweise veranschaulicht. Es zeigt

Fig. 1 in schematisierter Darstellungsweise ein nach optoelektronischen Abtastprinzipien arbeitendes inkrementales Meßsystem im Querschnitt durch Maßstab und Maßstabträger und

Fig. 2 Maßstab und Abtasteinheit eines erfindungsgemäßen Meßsystems in stark schematisierter Darstellungsweise im Schaubild.

Ein z. B. aus einem Glaskörper bestehender Maßstabkörper 1 ist mit einer als Strichteilung 2 dargestellten inkrementalen Meßteilung versehen. Der Maßstabkörper 1 ist in einem rohrförmigen, im oberen Bereich zu einem Träger verstärkten Schutzgehäuse 3 untergebracht und wird an einem Rand in einer Schwalbenschwanznut 4 mittels eines elastischen Andrückkörpers 5 festgehalten. Durch einen mit Dichtlippen 6 versehenen Schlitz 7 des Schutzgehäuses 3 ragt ein Schwert 8, das an einem gegenüber dem Gehäuse 3 und dem Maßstab 1 in Längsrichtung verstellbaren Körper 9 gehalten ist, der etwa auf einer Werkzeugmaschine die Verbindung mit dem Werkzeugschlitten herstellt. Am Schwert 8 ist ein U-förmiger Träger 10 angebracht, der Beleuchtungseinrichtungen 11 und zugeordnete optoelektronische Empfänger trägt, wobei die Beleuchtungseinrichtungen 11 die optoelektronischen Empfänger durch ein Abtastgitter 12 hindurch beleuchten, das gegeneinander um Maßstabbruchteile versetzte, den Empfängern, etwa Phototransistoren, Photodioden od. dgl., zugeordnete Abtastfelder aufweist, so daß an den Empfängern bei der Relativverstellung der Abtasteinheit 10 gegenüber dem Maßstab 1 phasenverschobene in der Grundform sinusförmige Analogsignale auftreten, die einer Auswertungseinheit zugeführt und dort in digitale Zählsignale für die Steuerung einer Anzeigeeinheit umgewandelt werden, wobei auch ein Richtungsdiskriminator zur Bestimmung der Verstellrichtung der Abtasteinheit 10 gegenüber dem Maßstab 1 und insbesondere mit einem Mikrocomputer ausgestattete Einrichtungen zur elektronischen oder rechnerischen Feinunterteilung des Maßstabes vorgesehen sein können. Soweit die Anordnung bisher beschrieben wurde, ist sie allgemein üblich. Das Gitter 12 kann gegenüber der übrigen Abtasteinheit 10 in Querrichtung verstellbar mit konstantem Andrückabstand am Maßstabkörper 1 geführt werden.

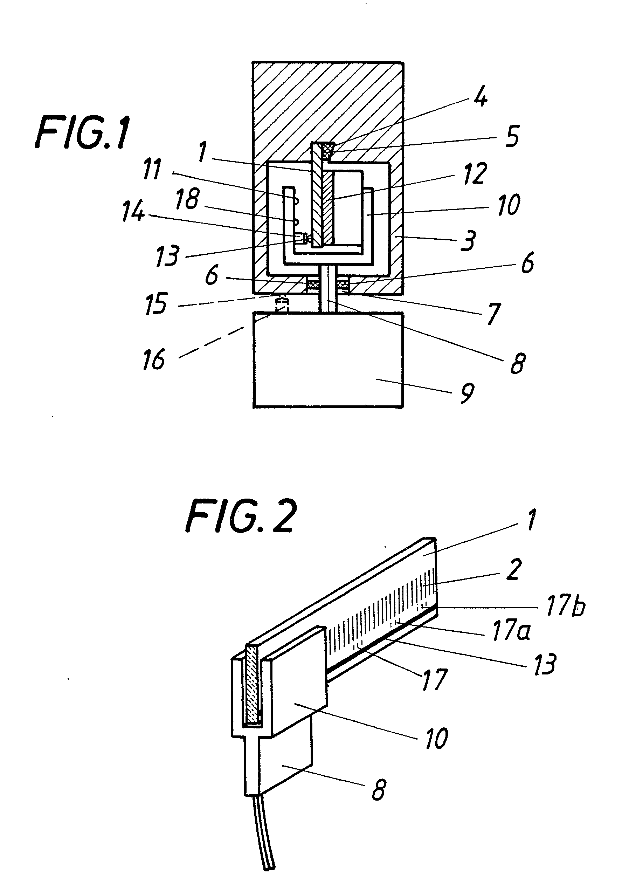

Nach der in den Fig. 1 und 2 voll dargestellten Ausführungsform ist am Maßstabkörper 1 parallel zur Meßteilung 2 ein linienförmiger Widerstandskörper 13 angebracht, an dem wenigstens ein mit der Abtasteinheit verstellbarer Abtastkontakt 14 anliegt. Dieser Widerstandskörper und der Abtastkontakt 14 liegen in einer Auswertungsschaltung, die eine Widerstands-Meßschaltung enthält, wobei das eine oder beide Enden des Widerstandskörpers 13 mit dieser Meßschaltung verbunden werden können. Die Auswertungsschaltung enthält Seicher oder Stellglieder zur Vorgabe von einzelnen Bezugspunkten zugeordneten Widerstandwerten und eine Vergleicherschaltung, die bei Übereinstimmung des durch die Abtastung erfaßten Momentanwertes des Widerstandes zwischen der Abtaststelle und dem einen Maßstabende bzw. des Verhältnisses der Widerstände des Widerstandskörpers zwischen den Enden und der Abtaststelle mit dem Vorgabewert ein Referenzsignal erzeugt, das der Auswertungsschaltung zugeführt wird. Es können mehrere Vorgabewerte fest eingespeichert sein oder im Bedarfsfall eingespeichert werden.

Nach der in Fig. 1 strichliert dargestellten Variante kann ein Widerstandskörper 15 auch am Gehäuse 3 isoliert angebracht werden, wobei für diesen Widerstandskörper ein am Teil 9 sitzender Abtastkontakt 16 vorgesehen wird.

Die bisher beschriebene Ausführungsform ermöglicht für viele Anwendungsfälle eine Festlegung von Bezugspunkten mit ausreichender Genauigkeit. Für eine hochgenaue Bestimmung einzelner Bezugspunkte ist es aber auch möglich, in einer weiteren Parallelspur zur Meßteilung mehrere identische Referenzmarken 17, 17a, 17b in gleicher oder unterschiedlicher Teilung vorzusehen und für sie an der Abtasteinheit zusätzliche Beleuchtungseinrichtungen 18 und hinter dem Gitter 12 entsprechende Empfänger vorzusehen, wobei das Gitter für die Abtastung der Referenzmarken 17, 17a, 17b ebenfalls eine entsprechende Teilung aufweist. An sich erzeugt jede abgetastete Referenzmarke in der zugehörigen Abtasteinheit bei Deckung des Abtastgitters mit der Referenzmarke ein Referenzsignal. Durch Vorgabe von dann nur Abtastbereiche festlegenden Vorgabewerten für den Widerstand in den Speichern oder Stellgliedern der Auswertungsschaltung können eine oder mehrere der Referenzmarken ausgewählt werden, so daß das von ihnen erzeugte Referenzsignal der weiteren Auswertung zugeführt wird. Dabei ist jeder Referenzpunkt durch den Widerstandsbereich und das an der Referenzmarke erzeugte Referenzsignal eindeutig definiert, so daß einer Steuerein heit mehrere Referenzsignale zugeführt werden können, wobei eindeutig festliegt, an welcher Maßstabstelle, d. h. bei welchem Referenzpunkt sich die Abtasteinheit eben befindet.

## Patentansprüche

1. Inkrementales Meßsystem, insbesondere Längenmeßsystem, mit einem Maßstab (1), auf dem eine die Maßstabverkörperung darstellende Meßteilung (2) vorgesehen ist, einer Abtasteinheit (10) mit Abtastelementen (11, 12) zur Erzeugung von Meßsignalen aus der Abtastung der Meßteilung und einer Auswertungseinheit zur Erzeugung von digitalen Zählsignalen aus diesen Meßsignalen, wobei eine zur Meßteilung (2) parallele, abtastbare Referenzspur (13) mit zugeordneter Auswertungsschaltung zur Bestimmung von Bezugspunkten vorgesehen ist, dadurch gekennzeichnet, daß die Referenzspur aus einem elektrischen Widerstandkörper (13, 15) besteht, an dem wenigstens ein mit der Abtasteinheit (10) verstellbarer Abtastkontakt (14, 16) anliegt und der in der Auswertungsschaltung mit dem Abtastkontakt in einer Widerstands-Meßschaltung liegt, so daß ein Bezugspunkt durch den elektrischen Widerstand zwischen einem Ende des Widerstandskörpers (13) und dem Abtastkontakt bzw. das Teilungsverhältnis des Widerstandskörpers durch den bzw. die Abtastkontakte definierbar ist.

2. Inkrementales Meßsystem nach Anspruch 1, dadurch gekennzeichnet, daß in einer weiteren Referenzspur mehrere, je einem festen Bezugspunkt zugeordnete Referenzmarken (17, 17a, 17b) und in der Abtasteinheit (10) zugeordnete Abtastelemente (18) vorgesehen sind, und daß die Auswertungsschaltung eine von der Widerstands-Meßschaltung gesteuerte Auswahleinrichtung enthält, die ein bei der Abtastung einer Referenzmarke erzeugtes Referenzsignal nur bei einem gleichzeitig erfaßten, vorgebbaren Widerstandswert der Auswertung zuführt.

3. Inkrementales Meßsystem nach den Ansprüchen 1 und 2, dadurch gekennzeichnet, daß der Widerstandskörper (13) am Maßstabkörper (1) parallel zur Meßteilung (2) angebracht ist.

4. Inkrementales Meßsystem nach Anspruch 1 oder 2, dadurch gekennzeichnet, daß der Widerstandskörper (15) an einem Maßstabträger (3), insbesondere an einem rohrförmigen Schutzgehäuse für Maßstab (1) und Abtasteinheit (10) isoliert angebracht ist.

5. Inkrementales Meßsystem nach einem der Ansprüche 1 bis 4, dadurch gekennzeichnet, daß die Auswertungsschaltung Speicher oder Stellglieder zur Vorgabe von einzelnen Bezugspunkten bzw. Referenzmarken (17, 17a, 17b) zugeordneten Widerstandswerten und eine Vergleicherschaltung aufweist, die bei Übereinstimmung des durch die Abtastung erfaßten Widerstandswertes mit dem Vorgabewert ein Referenzsignal erzeugt bzw. der Auswertung zuführt.

# FIG.1

# FIG.2